# EUROPEAN PATENT SPECIFICATION

(11) **EP 3 991 616 B1**
(45) Date of publication and mention of the grant of the patent: **25.06.2025**
(21) Application number: 20204102.6
(22) Date of filing: 27.10.2020
(51) Int. Cl.: A47J 47/01, A23P 20/12, A47G 19/24

(54) **SYSTEM FOR STORING AND DISPENSING SPICES**
SYSTEM ZUR AUFBEWAHRUNG UND AUSGABE VON GEWÜRZEN
SYSTÈME POUR STOCKER ET DISTRIBUER DES ÉPICES

(43) Date of publication of application: 04.05.2022
(73) Proprietor: BSH Hausgeräte GmbH, 81739 München (DE)
(72) Inventor: Koscak, Ales, 6230 Postojna (SI); Zilnik, Marko, 1218 Komenda (SI); Uplaznik, Marko, 3312 Prebold (SI)

(56) References cited:
- KR-A- 20140 107 068
- US-A1- 2017 280 763

## Description

The present document relates to a system for storing and dispensing spices in a precise and comfortable manner.

In many households, numerous different spices are available for cooking. Often users do not know how to make use of the different spices when cooking a food item, in particular with regards to mixing and dosing different spices.

A spice storage and dispensing system according to the preamble of claim 1 is described in KR20140107068A.

The present document addresses the technical problem of increasing the comfort when creating spice mixtures and/or of increasing the quality of spice mixtures. The technical problem is solved by each of the independent claims. Preferred examples are described in the dependent claims.

According to an aspect, a spice storage and dispensing system is described. The system comprises a base station with a plurality of different storage containers for storing a corresponding plurality of spices. The base station may be designed to be placed onto a workplace of a kitchen. The base station may comprise a power cord for providing a power supply to the base station. The base station may have a cylindrical (notably a circular cylindrical) housing, e.g. with a diameter of 25cm or less (e.g. between 15cm and 25cm) and/or with a height of 25cm or less.

The housing of the base station may exhibit a well, which is configured to take up a dispensing device of the system. The well may have a depth of 5cm or more (e.g. between 5cm and 15cm). The well may have a cylindrical, notably a circular cylindrical, shape. The well may be positioned at the center, notably around the center axis, of the housing of the base station.

The base station may comprise means for setting the air pressure, the temperature and/or the humidity within the plurality of storage containers of the base station. As a result of this, the base station may be configured to provide a reliable storage for spices.

The system further comprises a dispensing device which is configured to be coupled to the base station (e.g. by placing the dispensing device within the well of the base station) for transferring a spice from the base station to the dispensing device. Furthermore, the dispensing device is configured to be decoupled from the base station (e.g. by taking out the dispensing device from the well of the base station) for dispensing the spice from the dispensing device onto a food item.

The dispensing device may be designed to be held within the hand of a user. In particular, the dispensing device may have a diameter of 7cm or less and/or a height of 20cm or less. The dispensing device may e.g. have the shape of a handheld spice grinder.

In a preferred example, the housing of the dispensing device exhibits a corresponding shape with regards to the shape of the well, such that the dispensing device can be placed within the well for coupling the dispensing device with the base station. The well and the dispensing device may be designed such that 50% or more of the height of the dispensing device lies within the well, when the dispensing device is placed within the well, thereby ensuring a reliable transfer of spices from the base station to the dispensing device.

As indicated above, the well of the base station may have a cylindrical, notably a circular cylindrical, shape. The housing of the dispensing device may have a corresponding cylindrical, notably a corresponding circular cylindrical, shape. As a result of this, the transfer of spices may be performed in a particularly flexible and reliable manner.

The dispensing device comprises at least one storage container configured to take up a spice (notably a spice mixture) from one or more storage containers of the base station, when the dispensing device is coupled with the base station (notably when the dispensing device is placed within the well of the base station). Hence, the dispensing device may be configured to be charged or filled with one or more spices from the base station, when coupling the dispensing device with the base station.

Furthermore, the dispensing device comprises a controllable dispensing unit configured to dispense the spice from the storage container of the dispensing device. The dispensing unit may (at least partially) be placed at the bottom of the dispensing device. The dispensing device comprises a control element (e.g. a button) configured to cause the dispensing unit to dispense the spice from the storage container of the dispensing device, when being actuated by a user. The dispensing device may be used in a comfortable manner to spice a food item.

Hence, a system is described which comprises a handheld dispensing device that is configured to be refilled in a comfortable and reliable manner with spices from a base station.

The plurality of storage containers of the base station may be placed around the well, notably such that spices from the respective storage containers are directly transferable to the dispensing device, notably to the one or more storage containers of the dispensing device, placed within the well. In particular, the well may be located at the center, notably around the center axis, of the base station. The plurality of storage containers of the base station may be positioned on a circle around the well, notably around the center axis of the well or of the base station. As a result of this, a particularly efficient transfer of spices from the base station to the dispensing device may be provided.

In an example, the dispensing device comprises a corresponding plurality of storage containers to the plurality of storage containers of the base station. The system may be configured to transfer spices from a storage container of the base station to a corresponding storage container of the dispensing device (in a one-to-one correspondence), when the dispensing device is coupled with the base station (notably when the dispensing device is placed within the well of the base station). As a result of this, refilling of the storage containers of the dispensing device can be achieved in a particularly efficient manner.

The (circular cylindrically shaped) dispensing device may be configured to be turned within the well, notably around the center axis of the well, to cause the storage container of the dispensing device to sequentially face a different one of the plurality of storage containers of the base station. Turning of the dispensing device may then be used to selectively transfer spices from the storage container of the base station facing the storage container of the dispensing device to the storage container of the dispensing device. Hence, a turning movement of the dispensing device within the well may be used to efficiently and reliably transfer different spices to the dispensing device, e.g. for creating a spice mixture within the storage container of the dispensing device.

The system (notably the base station) may comprise a transfer mechanism configured to transfer a defined amount of spices from a container of the base station to the container of the dispensing device, when the dispensing device is coupled with the base station (notably when the dispensing device is placed within the well of the base station). The transfer mechanism may comprise a transfer channel for guiding spices from a (selected) container of the base station to the container of the dispensing device. The transfer channel may be configured to be opened when the dispensing device is coupled with the base station, and to be closed when the dispensing device is decoupled from the base station.

The transfer mechanism may e.g. comprise a fan for generating an air stream configured to carry spices across the transfer channel, and/or a worm shaft configured to withdraw spices from a container of the base station.

By providing a transfer mechanism, a precise and reliable transfer of spices from the base station to the dispensing device may be achieved.

The system may comprise a user interface, notably a user interface of the base station and/or a user interface of a separate personal electronic device (e.g. a smartphone) of the user of the system. The base station may comprise a control unit which is configured to determine a recipe for a spice mixture, wherein the recipe may have been selected by the user via the user interface. The recipe may have been selected from a list of recipes.

Furthermore, the control unit of the base station may be configured to trigger the generation of the spice mixture within the storage container of the dispensing device (based on the determined recipe) using the spices from one or more spice containers of the base station. For this purpose, the control unit may be configured to control one or more actuators of the base station in dependence of the determined recipe, to transfer spices from one or more storage containers of the base station to the storage container of the dispensing device, in order to generate the spice mixture (e.g. for generating the spice mixture in an automatic manner). Alternatively, or in addition, the control unit may be configured to output one or more instructions to the user via the user interface to cause the user to support the transfer of spices from one or more storage containers of the base station to the storage container of the dispensing device, in order to generate the spice mixture (e.g. for generating the spice mixture in a semi-automatic manner and/or in a manual manner). By taking into account data from a recipe, a spice mixture may be generated in a precise and reliable manner within the dispensing device.

The dispensing device may comprise a scent interface configured to be opened or closed to enable a user to smell and/or to taste the spice comprised within the storage container of the dispensing device, when being opened. By providing a specific scent interface within the dispensing device, the comfort for the user may be further increased.

The dispensing device may comprise a battery configured to store electrical energy for enabling an autonomous operation of the dispensing device, when the dispensing device is decoupled from the base station. The base station may comprise a charging unit for charging the battery of the dispensing device, when the dispensing device is coupled with the base station (notably when the dispensing device is placed within the well of the base station). As a result of this, the comfort of use of the dispensing device may be increase further.

The dispensing device may comprise a control unit configured to track the amount of spices that has (actually) been dispensed from the at least one storage container of the dispensing device. Furthermore, the control unit may be configured to cause a recipe for a spice mixture to be created and/or updated and stored on a data storage or memory unit (e.g. a data storage unit of the base station and/or a data storage unit of a server) based on the tracked amount of dispensed spices. Hence, the user may be enabled to create new spice mixtures in a comfortable and precise manner.

Furthermore, a base station is described, which comprises any one or more base station related features from this document. In addition, a dispensing device is described which comprises any one or more dispensing device related features from this document.

It should be noted that the systems including its preferred embodiments as outlined in the present document may be used stand-alone or in combination with the other systems disclosed in this document. In addition, the features outlined in the context of a system are also applicable to a corresponding method.

The invention is explained below in an exemplary manner with reference to the accompanying drawings, wherein
- Figure 1a: shows an example base station of a spice dispensing system;
- Figure 1b: shows an example dispensing device of the spice dispensing system;
- Figures 2a and 2b: show the spice dispensing system in different states; and
- Figure 3: shows an example transfer mechanism for refilling the dispensing device.

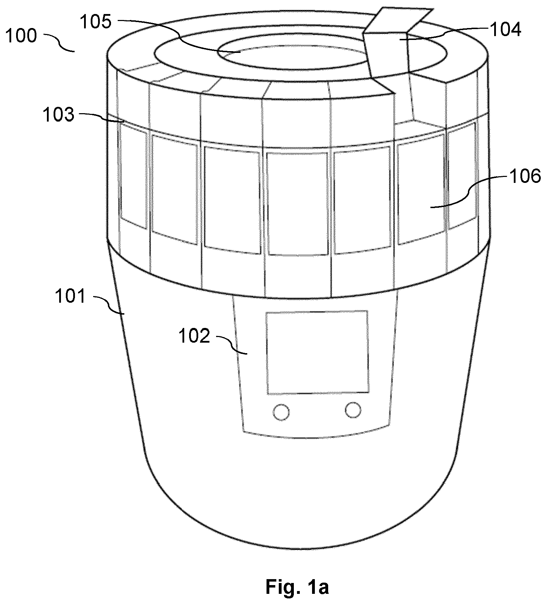

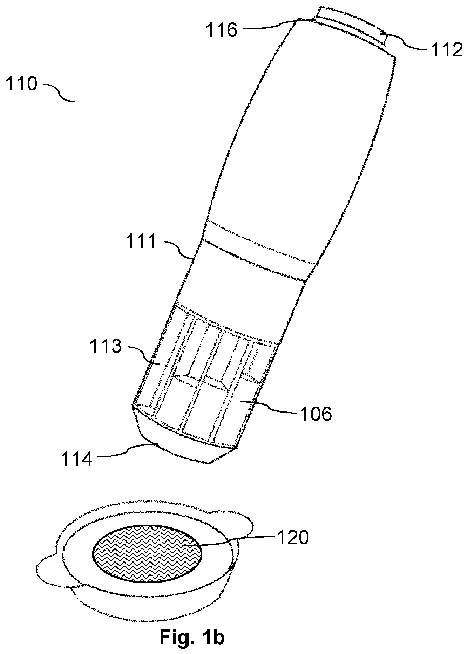

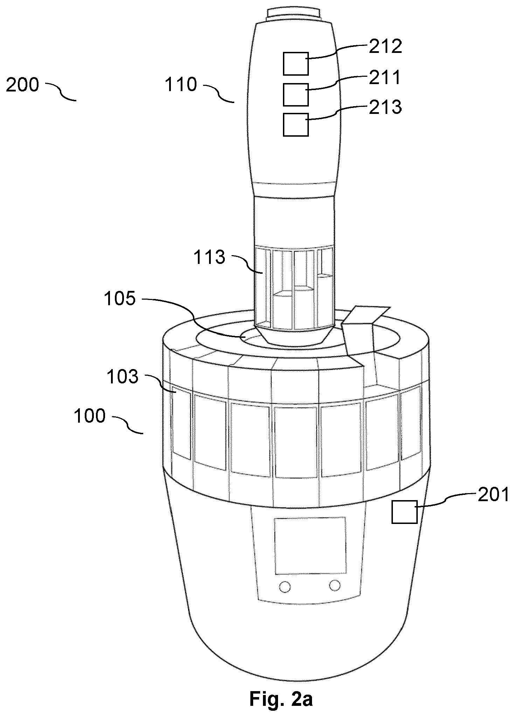

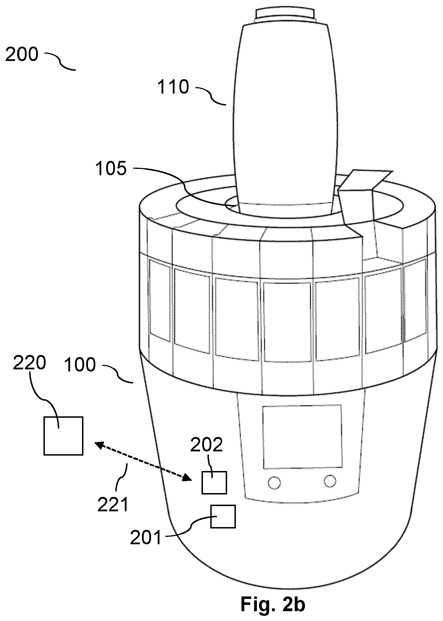

As outlined above, the present document is directed at enabling a user to create high quality spice mixtures in a comfortable manner. In this context, Fig. 1a shows a base station 100 and Fig. 1b shows a dispensing device 110 of a spice dispensing system. Figs. 2a and 2b show different states of the spice dispensing system 200.

The base station 100 comprises a housing 101 with a well (or slot) 105, into which the dispensing device 110 can be placed for refilling the one or more spice containers 113 of the dispensing device 110 with spices 106. The well 105 may be advantageously placed in the center of the housing 101 of the base station 100. The well 105 may exhibit a cylindrical (notably a circular cylindrical) shape, for taking up the dispensing device 110 having a housing 111 with a corresponding shape. The well 105 may extend from the upper surface of the housing 101 of the base station 100 downwards towards the lower surface of the housing 101 of the base station 100.

The base station 100 comprises a plurality of spice containers 103 for storing a corresponding plurality of different spices 106. The spice containers 103 may be arranged around the central well 105 of the base station 100. A spice container 103 comprises a cover 104 which is configured to be opened for filling a spice 106 into the container 103, and which is configured to be closed for protecting the spice 106 within the container 103.

The base station 100 comprises a user interface 102 with an output unit (e.g. a display) for outputting information to a user of the base station 100 and/or with an input unit (e.g. one or more input buttons) for user input. The user interface 102 may allow a user to select a recipe for a spice mixture and/or to initiate the creation of a spice mixture.

The dispensing device 110 shown in Fig. 1b comprises a (cylindrical) housing 111 which is adapted to the shape of the well 105 of the base station 100. Furthermore, the dispensing device 110 comprises one or more storage containers 113 which are each configured to take up a spice 106 or a spice mixture. The dispensing device 110 exhibits at the bottom of the housing 111 a dispensing unit 114 which is configured to dispense a spice 106 or spice mixture from the one or more containers 113 onto a food item 120. Dispensing of the spice 106 or spice mixture may be controlled using a control element 112 (e.g. a button) which may be conveniently placed at the top of the housing 111 of the dispensing device 110.

The dispensing device 110 may be configured to dispense the spice 106 or spice mixture from the one or more spice containers 113 through the dispensing unit 114, in reaction to a user actuating the control element 112.

The dispensing device 110 may exhibit a scent interface 116 which allows a user to smell the spice 106 or spice mixture within the one or more spice containers 113 of the dispensing device 110. The scent interface 116 may e.g. be coupled with the one or more spice containers 113 via one or more air ducts. The scent interface 116 may comprise a cover for closing and/or for opening the scent interface 116, thereby allowing the spice 106 or spice mixture to be stored in a reliable manner.

As illustrated in Figure 2a and 2b, the dispensing device 110 may be inserted into the well 105 of the base station 100, e.g. such that 50% or more of the length or height of the dispensing device 110 is contained within the base station 100 (as shown in Fig. 2b). Once the dispensing device 110 is located within the well 105 of the base station 100, the one or more storage containers 113 of the dispensing device 110 may be refilled with a spice 106 or a spice mixture from the plurality of storage containers 103 of the base station 100. For this purpose, a refill or transfer mechanism may be used.

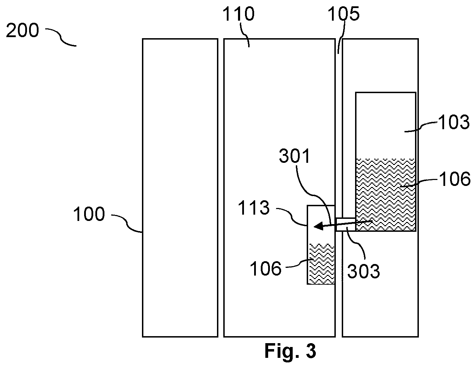

Fig. 3 shows a block diagram of the cross section of the spice dispensing system 200, within the dispensing device 110 being placed within the well 105 of the base station 100. The illustrated cross section cuts the spice dispensing system 200 in half, with the section plane being oriented perpendicular to the ground that the base station 100 is standing on.

As illustrated in Fig. 3, the dispensing device 110 may be placed within the well 105 of the base station 100 such that a storage container 113 of the dispensing device 110 is facing a storage container 103 of the base station 100. For transferring a spice 106 from the storage container 103 of the base station 100, a transfer channel 303 may be established between the storage container 103 of the base station 100 and the storage container 113 of the dispensing device 110. This may be achieved e.g. by providing a pipe at the storage container 113 of the base station 100 which opens a door (such as a flap or a valve) of the storage container 113 of the dispensing device 110, when the storage container 113 of the dispensing device 110 is positioned in front of the storage container 103 of the base station 100.

Once the storage container 103 of the base station 100 is coupled to the storage container 113 of the dispensing device 110 via a transfer channel 303, spice 106 may be transferred 301 via the transfer channel 303 from the base station 100 to the dispensing device 110. This may be achieved by making use of a worm shaft or by making use of an air stream. The transfer channel 303 may allow to dose the amount of spice 106 that is being transferred from the base station 100 to the dispensing device 100. The base station 100 may comprise an electrical actuator 201 which is configured to actuate the transfer mechanism (e.g. a motor for turning the worm shaft or a fan for generating the air stream).

The base station 100 may comprise a control unit 202 which is configured to control the operation of the base station 100, notably with regards to the transfer of one or more spices 106 from one or more containers 103 of the base station 100 to the dispensing device 110. In particular, the control unit 202 may enable a user of the base station 100 to select a recipe for a spice mixture which is to be transferred from the base station 100 to the dispensing device 110. The control unit 202 may have access to a list of different recipes, which may be stored on a local data storage unit (not shown) of the base station 100 and/or which may be provided to the base station 100 from an external server 220 via a (wireless) communication interface 221.

The user interface 102 of the base station 100 may enable the user to scroll through the list of recipes and to select an appropriate recipe. The list of recipes, which is provided to the user, may depend on the plurality of spices 106 which are stored in the plurality of storage containers 103 of the base station 100. In particular, the list of recipes may be determined such that the list of recipes only comprises recipes for spice mixtures, which can be created using the spices 106 that are stored within the base station 100.

The user may select a recipe from the list of recipes via the user interface 102. The control unit 202 may then cause the base station 100 to transfer one or more spices 106 from one or more storage containers 103 of the base station 100 to the dispensing device 110, in accordance to the selected recipe. This may be performed automatically. Alternatively, or in addition, the control unit 202 may guide the user via the user interface 102 through the mixing process for creasing the spice mixture corresponding to the selected recipe. By way of example, the user may be asked to turn the storage container 113 of the dispensing device 100 sequentially to different storage containers 103 of the base station 100, so that spices 106 from the different storage containers 103 of the base station 100 can be transferred to the storage container 113 of the dispensing device 100.

After having created a spice mixture within the dispensing device 110 using one or more spices 106 from the base station 100, the user may withdraw the dispensing device 110 from the well or slot 105 of the base station 100. The dispensing unit 114 of the dispensing device 110 may then be positioned above a food item 120, and the control element 112 of the dispensing device 110 may be actuated for causing the dispensing unit 114 to dispense some or all of the spice mixture from the storage container 113 of the dispensing device 110 onto the food item 120.

The dispensing device 110 may comprise a battery 213 which is configured to store electrical energy for enabling an autonomous operation of the dispensing device 110. The base station 100 may comprise a charging unit (not shown) for charging the battery 213, when the dispensing device 110 is placed within the (well 105 of the) base station 100.

The dispensing device 110 comprises a control unit 212 which is configured to control the operation of the dispensing device 110, notably to control the operation of the dispensing unit 114 and/or the operation of the scent interface 116. In particular, an actuator of the dispensing device 110 (not shown) may be controlled for causing the dispensing unit 114 to dispense the spice mixture from the storage container 113 of the dispensing device 110.

Hence, a spice dispensing system 200 is described which comprises a base station 100 that acts as a relatively big storage space for herbs and/or spices 106. Furthermore, the spice dispensing system 200 comprises a relatively small dispenser device or dispensing device 110, which is configured to be placed in a well 105 in the middle of the base station 100 and which may be used for dispensing the right amount of herbs or spices 106 within a meal in a comfortable manner.

The base station 100 comprises a plurality of storage containers 103 for storing herbs and/or spices 106 in an appropriate manner (e.g. within a (partial) vacuum and/or at a defined temperature). The base station 100 may comprise means (e.g. a pump) for generating a (partial) vacuum within one or more storage containers 103. Alternatively, or in addition, the base station 100 may comprise means for setting the temperature and/or the humidity within one or more storage containers 103 to a target temperature and/or to a target humidity level. The herbs and/or spices 106 may be stored as powder or in pieces.

The dispensing device 110 may be filled from the one or more storage containers 103 of the base station 100. This transfer process may be controlled by a user via a user interface 102 of the base station 100 and/or via a software application provided on an electronic device (e.g. a smartphone or tablet PC) of the user. Alternatively, or in addition, a manual transfer of herbs and/or spices 106 from the base station 100 to the dispensing unit 110 may be enabled (when the dispensing device 110 is placed within the well 105 of the base station 100). The dispensing device 110 may then be used to spice a food item 120. The dispensing may be controlled by the user or may be performed automatically (e.g. according to the amount defined within a recipe).

The list of recipes may be stored and/or updated on the base station 110, on an external server 220 and/or on an electronic device of the user (e.g. using a software application). The user may be enabled to select and/or to edit a recipe.

The dispensing device 110, notably the control unit 212 of the dispensing device 110, may be configured to track the amount of a spice or spice mixture 106 that has been dispensed by the dispensing device 110. The actually dispensed amount may deviate from the amount that is indicated within a recipe. This information may be used by the control unit 212 to update the recipe and/or to create a new recipe (based on the actually dispensed amount of spice or spice mixture 106).

The dispensing device 110 and/or the base station 100 may have different operation modes, such as
- an automatic operation mode for dosing a spice or a spice mixture 106 automatically;
- a semi-automatic operation mode for dosing different spices 106 from different storage containers 113, 103 automatically; and/or
- a manual operation mode for dosing one or more spices 106 from one or more storage containers 113, 103 manually (e.g. by rotating the dispensing device 110 manually within the well 105 of the base station 100).

As indicated above, the dispensing device 110 may comprise a scent interface 116 which enables a user to smell and/or to taste a spice 106 or spice mixture before usage. Furthermore, the dispensing device 110 may comprise a motor 213 powered by a battery 211 for dispensing one or more spices 106.

The spice storage and dispensing system 200 described herein allows a user to properly store herbs 106, to create and to dispense a mixture of herbs 106 in a precise and comfortable manner, and possibly to easily smell and/or taste herbs 106. A software application for an electronic device may be provided to enable a comfortable and reliable control of the system 200.

It should be noted that the description and drawings merely illustrate the principles of the proposed methods and systems. Those skilled in the art will be able to implement various arrangements that, although not explicitly described or shown herein, embody the principles of the invention and are included within its scope as defined in the appended claims. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A spice storage and dispensing system (200) comprising
- a base station (100) with a plurality of different storage containers (103) for storing a corresponding plurality of spices (106); and
- a dispensing device (110) which is configured to be coupled to the base station (100) for transferring a spice (106) from the base station (100) to the dispensing device (110); and to be decoupled from the base station (100) for dispensing the spice (106) onto a food item (120); wherein the dispensing device (110) comprises
- at least one storage container (113) configured to take up a spice (106) from one or more storage containers (103) of the base station (100), when the dispensing device (110) is coupled with the base station (100); and
- a controllable dispensing unit (114) configured to dispense the spice (106) from the storage container (113) of the dispensing device (110),
**characterized in that**
the dispensing device (110) comprises a control element (112) configured to cause the dispensing unit (114) to dispense the spice (106) from the storage container (113) of the dispensing device (110), when being actuated by a user.

2. The system (200) of claim 1, wherein
- the base station (100) comprises a housing (101) with a well (105) for placing the dispensing device (110); and
- the well (105) exhibits a corresponding shape with regards to a housing (111) of the dispensing device (110), such that the dispensing device (110) can be placed within the well (105) for coupling the dispensing device (110) with the base station (100).

3. The system (200) of claim 2, wherein the plurality of storage containers (103) of the base station (100) are placed around the well (105), notably such that spices (106) from the respective storage containers (103) are directly transferable to the dispensing device (110), notably to the storage container (113) of the dispensing device (110), placed within the well (105).

4. The system (200) of any of claims 2 to 3, wherein
- the housing (111) of the dispensing device (110) has a cylindrical, notably a circular cylindrical, shape; and
- the well (105) of the base station (110) has a corresponding cylindrical, notably a corresponding circular cylindrical, shape.

5. The system (200) of any of claims 2 to 4, wherein
- the well (105) is located at a center, notably around a center axis, of the base station (100); and
- the plurality of storage containers (103) of the base station (100) are positioned on a circle around the well (105), notably around the center axis.

6. The system (200) of any of claims 2 to 5, wherein the dispensing device (110) is configured to be turned within the well (105), notably around a center axis of the well (105), to cause the storage container (113) of the dispensing device (110) to sequentially face a different one of the plurality of storage containers (103) of the base station (100), notably for selectively transferring spices (106) from the storage container (103) of the base station (100) facing the storage container (113) of the dispensing device (110) to the storage container (113) of the dispensing device (110).

7. The system (200) of any previous claims, wherein
- the system (200) comprises a transfer mechanism configured to transfer a defined amount of spices (106) from a container (103) of the base station (100) to the container (113) of the dispensing device (110), when the dispensing device (110) is coupled with the base station (100);
- the transfer mechanism comprises a transfer channel (303) for guiding spices (106) from a container (103) of the base station (100) to the container (113) of the dispensing device (110); and
- the transfer channel (303) is notably configured to be opened when the dispensing device (110) is coupled with the base station (100), and to be closed when the dispensing device (110) is decoupled from the base station (100).

8. The system (200) of claim 7, wherein the transfer mechanism comprises
- a fan for generating an air stream configured to carry spices (106) across the transfer channel (303); and/or
- a worm shaft configured to withdraw spices (106) from a container (103) of the base station (100).

9. The system (200) of any previous claims, wherein
- the system (200) comprises a user interface (102), notably a user interface (102) of the base station (100) and/or a user interface of a separate personal electronic device of a user of the system (200);
- the base station (100) comprises a control unit (202); and
- the control unit (202) is configured to
- determine a recipe for a spice mixture, selected by the user via the user interface (102); and
- trigger generation of the spice mixture within the storage container (113) of the dispensing device (110) using the spices (106) from one or more spice containers (103) of the base station (100).

10. The system (200) of claim 9, the control unit (202) is configured to
- control one or more actuators (201) of the base station (100) in dependence of the determined recipe, to transfer spices (106) from one or more storage containers (103) of the base station (100) to the storage container (113) of the dispensing device (110), in order to generate the spice mixture; and/or
- output one or more instructions to the user via the user interface (102) to cause the user to support the transfer of spices (106) from one or more storage containers (103) of the base station (100) to the storage container (113) of the dispensing device (110), in order to generate the spice mixture.

11. The system (200) of any previous claims, wherein the dispensing device (110) comprises a scent interface (116) configured to be opened or closed to enable a user to smell and/or to taste the spice (106) comprised within the storage container (113) of the dispensing device (110), when being opened.

12. The system (200) of any previous claims, wherein
- the dispensing device (110) comprises a battery (211) configured to store electrical energy for enabling an autonomous operation of the dispensing device (110), when the dispensing device (110) is decoupled from the base station (110); and
- the base station (110) notably comprises a charging unit for charging the battery (211) of the dispensing device (110), wherein the dispensing device (110) is coupled with the base station (110).

13. The system (200) of any previous claims, wherein the base station (100) comprises means for setting an air pressure, a temperature and/or a humidity within the plurality of storage containers (103) of the base station (100).

14. The system (200) of any previous claims, wherein the dispensing device (110) comprises a control unit (212) configured to
- track an amount of spices (106) being dispensed from the at least one storage container (113) of the dispensing device (110); and
- cause a recipe for a spice mixture to be created and/or updated and stored on a data storage unit based on the tracked amount of dispensed spices (106).

## Patentansprüche

1. Gewürzaufbewahrungs- und -abgabesystem (200), das Folgendes umfasst:
- eine Basisstation (100) mit mehreren verschiedenen Aufbewahrungsbehältern (103) zum Aufbewahren mehrerer entsprechender Gewürze (106) und
- eine Abgabevorrichtung (110), die so ausgelegt ist, dass sie sich zum Umfüllen eines Gewürzes (106) aus der Basisstation (100) in die Abgabevorrichtung (110) mit der Basisstation (100) koppeln und zum Abgeben des Gewürzes (106) auf ein Lebensmittel (120) von der Basisstation (100) entkoppeln lässt, wobei die Abgabevorrichtung (110) Folgendes umfasst:
- mindestens einen Aufbewahrungsbehälter (113), der so ausgelegt ist, dass er ein Gewürz (106) aus einem oder mehreren Aufbewahrungsbehältern (103) der Basisstation (100) aufnimmt, wenn die Abgabevorrichtung (110) mit der Basisstation (100) gekoppelt ist, und
- eine steuerbare Abgabeeinheit (114), die so ausgelegt ist, dass sie das Gewürz (106) aus dem Aufbewahrungsbehälter (113) der Abgabevorrichtung (110) abgibt,
**dadurch gekennzeichnet, dass**
die Abgabevorrichtung (110) ein Bedienelement (112) umfasst, das so ausgelegt ist, dass es die Abgabeeinheit (114) dazu veranlasst, das Gewürz (106) aus dem Aufbewahrungsbehälter (113) der Abgabevorrichtung (110) abzugeben, wenn es von einem Benutzer betätigt wird.

2. System (200) nach Anspruch 1, wobei
- die Basisstation (100) ein Gehäuse (101) mit einem Schacht (105) zum Abstellen der Abgabevorrichtung (110) umfasst und
- der Schacht (105) im Hinblick auf ein Gehäuse (111) der Abgabevorrichtung (110) eine entsprechende Form aufweist, so dass die Abgabevorrichtung (110) zum Koppeln der Abgabevorrichtung (110) mit der Basisstation (100) in den Schacht (105) hineingestellt werden kann.

3. System (200) nach Anspruch 2, wobei die mehreren Aufbewahrungsbehälter (103) der Basisstation (100) um den Schacht (105) herum insbesondere so angeordnet sind, dass sich Gewürze (106) aus den jeweiligen Aufbewahrungsbehältern (103) direkt in die in den Schacht (105) hineingestellte Abgabevorrichtung (110), insbesondere den Aufbewahrungsbehälter (113) der Abgabevorrichtung (110) umfüllen lassen.

4. System (200) nach einem der Ansprüche 2 bis 3, wobei
- das Gehäuse (111) der Abgabevorrichtung (110) eine zylindrische, insbesondere eine kreisrunde zylindrische Form aufweist und
- der Schacht (105) der Basisstation (110) eine entsprechende zylindrische, insbesondere eine entsprechende kreisrunde zylindrische Form aufweist.

5. System (200) nach einem der Ansprüche 2 bis 4, wobei
- der Schacht (105) in einer Mitte, insbesondere um eine Mittelachse der Basisstation (100) herum liegt und
- die mehreren Aufbewahrungsbehälter (103) der Basisstation (100) im Kreis um den Schacht (105), insbesondere die Mittelachse herum positioniert sind.

6. System (200) nach einem der Ansprüche 2 bis 5, wobei die Abgabevorrichtung (110) so ausgelegt ist, dass sie sich in dem Schacht (105), insbesondere um eine Mittelachse des Schachts (105) drehen kann und so bewirkt, dass der Aufbewahrungsbehälter (113) der Abgabevorrichtung (110) der Reihe nach einem anderen der mehreren Aufbewahrungsbehälter (103) der Basisstation (100) zugewandt ist, insbesondere zum gezielten Umfüllen von Gewürzen (106) aus dem dem Aufbewahrungsbehälter (113) der Abgabevorrichtung (110) zugewandten Aufbewahrungsbehälter (103) der Basisstation (100) in den Aufbewahrungsbehälter (113) der Abgabevorrichtung (110).

7. System (200) nach einem der vorhergehenden Ansprüche, wobei
- das System (200) einen Umfüllmechanismus umfasst, der so ausgelegt ist, dass er eine vorgegebene Menge Gewürze (106) aus einem Behälter (103) der Basisstation (100) in den Behälter (113) der Abgabevorrichtung (110) umfüllt, wenn die Abgabevorrichtung (110) mit der Basisstation (100) gekoppelt ist,
- der Umfüllmechanismus einen Umfüllkanal (303) zum Leiten von Gewürzen (106) aus einem Behälter (103) der Basisstation (100) in den Behälter (113) der Abgabevorrichtung (110) umfasst und
- der Umfüllkanal (303) insbesondere so ausgelegt ist, dass er geöffnet wird, wenn die Abgabevorrichtung (110) mit der Basisstation (100) gekoppelt ist, und geschlossen wird, wenn die Abgabevorrichtung (110) von der Basisstation (110) entkoppelt ist.

8. System (200) nach Anspruch 7, wobei der Umfüllmechanismus Folgendes umfasst:
- ein Gebläse zum Erzeugen eines Luftstroms, der so ausgelegt ist, dass er Gewürze (106) durch den Umfüllkanal (303) befördert, und/oder
- eine Schneckenwelle, die so ausgelegt ist, dass sie einem Behälter (103) der Basisstation (100) Gewürze (106) entnimmt.

9. System (200) nach einem der vorhergehenden Ansprüche, wobei
- das System (200) eine Benutzerschnittstelle (102), insbesondere eine Benutzerschnittstelle (102) der Basisstation (100) und/oder eine Benutzerschnittstelle eines separaten persönlichen elektronischen Geräts des Benutzers des Systems (200) umfasst,
- die Basisstation (100) eine Steuereinheit (202) umfasst und
- die Steuereinheit (202) so ausgelegt ist, dass sie:
- ein Rezept für eine Gewürzmischung festlegt, das von dem Benutzer über die Benutzerschnittstelle (102) ausgewählt wird, und
- das Zusammenstellen der Gewürzmischung in dem Aufbewahrungsbehälter (113) der Abgabevorrichtung (110) mithilfe der Gewürze (106) aus einem oder mehreren Gewürzbehältern (103) der Basisstation (100) veranlasst.

10. System (200) nach Anspruch 9, wobei die Steuereinheit (202) so ausgelegt ist, dass sie:
- einen oder mehrere Aktuatoren (201) der Basisstation (100) in Abhängigkeit von dem festgelegten Rezept so steuert, dass Gewürze (106) aus einem oder mehreren Aufbewahrungsbehältern (103) der Basisstation (100) in den Aufbewahrungsbehälter (113) der Abgabevorrichtung (110) umgefüllt werden, damit die Gewürzmischung zusammengestellt wird, und/oder
- über die Benutzerschnittstelle (102) eine oder mehrere Anweisungen an den Benutzer ausgibt, die diesen dazu veranlassen, das Umfüllen von Gewürzen (106) aus einem oder mehreren Aufbewahrungsbehältern (103) der Basisstation (100) in den Aufbewahrungsbehälter (113) der Abgabevorrichtung (110) zu unterstützen, damit die Gewürzmischung zusammengestellt wird.

11. System (200) nach einem der vorhergehenden Ansprüche, wobei die Abgabevorrichtung (110) eine Riechöffnung (116) umfasst, die so ausgelegt ist, dass sie sich öffnen oder schließen lässt, damit ein Benutzer, wenn sie geöffnet wird, das Gewürz (106) in dem Aufbewahrungsbehälter (113) der Abgabevorrichtung (110) riechen und/oder kosten kann.

12. System (200) nach einem der vorhergehenden Ansprüche, wobei
- die Abgabevorrichtung (110) eine Batterie (211) umfasst, die so ausgelegt ist, dass sie elektrische Energie speichert, die einen eigenständigen Betrieb der Abgabevorrichtung (110) ermöglicht, wenn diese von der Basisstation (110) entkoppelt ist, und
- die Basisstation (110) insbesondere eine Ladeeinheit umfasst, mit der die Batterie (211) der Abgabeeinheit (110) aufgeladen wird, wobei die Abgabevorrichtung (110) mit der Basisstation (110) gekoppelt ist.

13. System (200) nach einem der vorhergehenden Ansprüche, wobei die Basisstation (100) Mittel zum Einstellen eines Luftdrucks, einer Temperatur und/oder einer Feuchtigkeit in den mehreren Aufbewahrungsbehältern (103) der Basisstation (100) umfasst.

14. System (200) nach einem der vorhergehenden Ansprüche, wobei die Abgabevorrichtung (110) eine Steuereinheit (212) umfasst, die so ausgelegt ist, dass sie:
- eine Menge an Gewürzen (106) registriert, die aus dem mindestens einen Aufbewahrungsbehälter (113) der Abgabevorrichtung (110) abgegeben wurde, und
- bewirkt, dass auf der Grundlage der registrierten Menge abgegebener Gewürze (106) ein Rezept für eine Gewürzmischung zusammengestellt und/oder aktualisiert und in einer Datenspeichereinheit gespeichert wird.

## Revendications

1. Système de stockage et de distribution d'épice (200) comprenant ;
- une station de base (100) comprenant une pluralité de récipients de stockage différents (103) pour stocker une pluralité correspondante d'épices (106), et
- un dispositif de distribution (110) qui est configuré pour être couplé à la station de base (100) afin de transférer une épice (106) de la station de base (100) jusqu'au dispositif de distribution (110), et pour être découplé de la station de base (100) pour distribuer l'épice (106) sur un aliment (120), dans lequel le dispositif de distribution (110) comprend :
- au moins un récipient de stockage (113) configuré pour prélever une épice (106) à partir de l'un ou plusieurs récipients de stockage (103) de la station de base (100), lorsque le dispositif de distribution (110) est couplé à la station de base (100), et
- une unité de distribution commandable (114) configurée pour distribuer l'épice (106) à partir du récipient de stockage (113) du dispositif de distribution (110),
**caractérisé en ce que**
le dispositif de distribution (110) comprend un élément de commande (112) configuré pour amener l'unité de distribution (114) à distribuer l'épice (106) à partir du récipient de stockage (113) du dispositif de distribution (110), lorsqu'il est actionné par un utilisateur.

2. Système (200) selon la revendication 1, dans lequel
- la station de base (100) comprend un boîtier (101) comportant un puits (105) pour placer le dispositif de distribution (110), et
- le puits (105) présente une forme correspondante en rapport à un boîtier (111) du dispositif de distribution (110), de sorte que le dispositif de distribution (110) peut être placé à l'intérieur du puits (105) pour coupler le dispositif de distribution (110) à la station de base (100).

3. Système (200) selon la revendication 2, dans lequel la pluralité des récipients de stockage (103) de la station de base (100) sont placés autour du puits (105), notamment de sorte que des épices (106) des récipients de stockage respectifs (103) peuvent être transférées directement au dispositif de distribution (110), notamment au récipient de stockage (113) du dispositif de distribution (110) placé à l'intérieur du puits (105).

4. Système (200) selon l'une quelconque des revendications 2 à 3, dans lequel :
- le boîtier (111) du dispositif de distribution (110) a une forme cylindrique, notamment une forme cylindrique circulaire, et
- le puits (105) de la station de base (110) a une forme cylindrique correspondante, notamment une forme cylindrique circulaire correspondante.

5. Système (200) selon l'une quelconque des revendications 2 à 4, dans lequel :
- le puits (105) est situé à un centre, notamment autour d'un axe central, de la station de base (100), et
- la pluralité des récipients de stockage (103) de la station de base (100) sont positionnés sur un cercle autour du puits (105), notamment autour de l'axe central.

6. Système (200) selon l'une quelconque des revendications 2 à 5, dans lequel le dispositif de distribution (110) est configuré pour être tourné à l'intérieur du puits (105), notamment autour d'un axe central du puits (105), pour amener le récipient de stockage (113) du dispositif de distribution (110) à faire face de manière séquentielle à un récipient différent de la pluralité des récipients de stockage (103) de la station de base (100), notamment pour transférer sélectivement des épices (106) du récipient de stockage (103) de la station de base (100) faisant face au récipient de stockage (113) du dispositif de distribution (110) jusqu'au récipient de stockage (113) du dispositif de distribution (110).

7. Système (200) selon l'une quelconque des revendications précédentes, dans lequel
- le système (200) comprend un mécanisme de transfert configuré pour transférer une quantité définie d'épices (106) à partir d'un récipient (103) de la station de base (100) jusqu'au récipient (113) du dispositif de distribution (110), lorsque le dispositif de distribution (110) est couplé à la station de base (100),
- le mécanisme de transfert comprend un canal de transfert (303) pour guider des épices (106) d'un récipient (103) de la station de base (100) jusqu'au récipient (113) du dispositif de distribution (110), et
- le canal de transfert (303) est notamment configuré pour être ouvert lorsque le dispositif de distribution (110) est couplé à la station de base (100), et pour être fermé lorsque le dispositif de distribution (110) est découplé de la station de base (100).

8. Système (200) selon la revendication 7, dans lequel le mécanisme de transfert comprend :
- un ventilateur pour générer un flux d'air configuré pour transporter des épices (106) le long du canal de transfert (303), et/ou
- un arbre à vis sans fin configuré pour prélever des épices (106) d'un récipient (103) de la station de base (100).

9. Système (200) selon l'une quelconque des revendications précédentes, dans lequel
- le système (200) comprend une interface utilisateur (102), notamment une interface utilisateur (102) de la station de base (100) et/ou une interface utilisateur d'un dispositif électronique personnel séparé d'un utilisateur du système (200),
- la station de base (100) comprend une unité de commande (202), et
- l'unité de commande (202) est configurée pour
- déterminer une recette pour un mélange d'épices, sélectionnée par l'utilisateur via l'interface utilisateur (102), et
- déclencher la génération du mélange d'épices à l'intérieur du récipient de stockage (113) du dispositif de distribution (110) en utilisant les épices (106) d'un ou plusieurs récipients d'épice (103) de la station de base (100).

10. Système (200) selon la revendication 9, dans lequel l'unité de commande (202) est configurée pour :
- commander un ou plusieurs actionneurs (201) de la station de base (100), en fonction de la recette déterminée, pour transférer des épices (106) à partir d'un ou plusieurs récipients de stockage (103) de la station de base (100) jusqu'au récipient de stockage (113) du dispositif de distribution (110), afin de générer le mélange d'épices, et/ou
- délivrer une ou plusieurs instructions à l'utilisateur via l'interface utilisateur (102) pour amener l'utilisateur à soutenir le transfert des épices (106) de l'un ou plusieurs récipients de stockage (103) de la station de base (100) jusqu'au récipient de stockage (113) du dispositif de distribution (110), afin de générer le mélange d'épices.

11. Système (200) selon l'une quelconque des revendications précédentes, dans lequel le dispositif de distribution (110) comprend une interface d'effluve (116) configurée pour être ouverte ou fermée afin de permettre à un utilisateur de sentir et/ou de goûter l'épice (106) comprise dans le récipient de stockage (113) du dispositif de distribution (110), lorsqu'elle est ouverte.

12. Système (200) selon l'une quelconque des revendications précédentes, dans lequel :
- le dispositif de distribution (110) comprend une batterie (211) configurée pour stocker de l'énergie électrique afin de permettre un fonctionnement autonome du dispositif de distribution (110) lorsque le dispositif de distribution (110) est découplé de la station de base (110), et
- la station de base (110) comprend notamment une unité de charge pour charger la batterie (211) du dispositif de distribution (110), dans lequel le dispositif de distribution (110) est couplé à la station de base (110).

13. Système (200) selon l'une quelconque des revendications précédentes, dans lequel la station de base (100) comprend des moyens pour régler une pression d'air, une température et/ou une humidité à l'intérieur de la pluralité des récipients de stockage (103) de la station de base (100).

14. Système (200) selon l'une quelconque des revendications précédentes, dans lequel le dispositif de distribution (110) comprend une unité de commande (212) configurée pour :
- suivre une quantité d'épices (106) en train d'être distribuée à partir de l'au moins un récipient de stockage (113) du dispositif de distribution (110), et
- amener une recette d'un mélange d'épices à être créée et/ou actualisée et stockée sur une unité de stockage de données sur la base de la quantité suivie d'épices distribuées (106).
